# EUROPÄISCHE PATENTSCHRIFT

(11) **EP 1 105 345 B1**
(45) Veröffentlichungstag und Bekanntmachung des Hinweises auf die Patenterteilung: **08.10.2003**
(21) Anmeldenummer: 00929487.7
(22) Anmeldetag: 04.05.2000
(51) Int. Cl.: C01B 25/42

(54) **VERFAHREN ZUR HERSTELLUNG VON MONONATRIUMTRIHYDROGENPYROPHOSPHAT**
METHOD FOR PRODUCING MONONATRIUM TRIHYDROGEN PYROPHOSPHATE
PROCEDE DE PRODUCTION DE MONOSODIUMTRIHYDROGENOPYROPHOSPHATE

(30) Priorität: 10.05.1999 DE 19921620
(43) Veröffentlichungstag der Anmeldung: 13.06.2001
(73) Patentinhaber: BK Giulini Chemie GmbH & Co. OHG, 67065 Ludwigshafen (DE)
(72) Erfinder: KLEIN, Thomas, D-69121 Heidelberg (DE); PLATZ, Kerstin, D-67141 Neuhofen (DE); WAHL, Friedrich, D-68219 Mannheim (DE)
(86) Internationale Anmeldenummer: EP0003980
(87) Internationale Veröffentlichungsnummer: WO00068145

(56) Entgegenhaltungen:
- WINKLER ET AL : "Der Entwässerungsverlauf von (NaH2PO4-H3PO4) und (KH2PO4-H3PO4) Gemischen bei Temperaturen bis zu 350C" ZEITSCHRIFT FÜR ANORGANISCHE UND ALLGEMEINE CHEMIE, Bd. 306, 1960, Seiten 317-332, XP000915122 in der Anmeldung erwähnt
- COMPTES RENDUS, Bd. 134, 1902, Seiten 1499-1502, XP000864689 in der Anmeldung erwähnt

## Beschreibung

Gegenstand der vorliegenden Erfindung ist ein neues Verfahren zur Herstellung von Mononatriumtrihydrogenpyrophosphat sowie die Verwendung der so hergestellten Produkte als Säuerungsmittel, Puffersubstanz und Komplexbildner.

Die Verwendung von Alkali-, insbesondere Natriumphosphaten in der Nahrungsmittel-, Textil- und Papierindustrie als Säuerungsmittel, Puffersubstanz und Komplexbildner ist weit verbreitet. Um eine reproduzierbare Anwendung zu erreichen, werden dabei vorzugsweise homogene kristalline Salze eingesetzt. Eine bevorzugte Gruppe bilden die Diphosphate oder Pyrophosphate der Formel MeₙH₄₋ₙP₂O₇, welche gut kristallisieren und vergleichsweise gut löslich sind. Häufig werden auch Metaphosphate oder Polyphosphate eingesetzt, z.B. Madrall'sches-, Kurollisches-, Graham-Salz, saures Phosphatglas), die durch Entwässern von entsprechend zusammengesetzten Lösungen aus Natronlauge oder Natriumcarbonat und Phosphorsäure herstellbar sind. Diese weisen im allgemeinen jedoch eine verminderte Löslichkeit und vor allem durch das Herstellverfahren differierende Eigenschaften und Zusammensetzungen auf, so daß die Diphosphate in vielen Fällen vorteilhaft sind.

Technisch verwendete Diphosphate sind vor allem Tetranatriumpyrophosphat Na₄P₂O₇ (Synthese aus Dinatriumphosphat Na₂HPO₄ durch Calcinieren bei Temperaturen zwischen 300°C und 900°C) sowie das saure Diphosphat Na₂H₂P₂O₇ (zugänglich aus Mononatriumphosphat NaH₂PO₄ durch Erhitzen auf 200-250°C). Relativ selten wird das Phosphat Na₃HP₂O₇ (aus einer Mischung von Na₄P₂O₇ und Na₂H₂P₂O₇, die mit Wasser besprüht wird) verwendet. NaH₃P₂O₇ wurde bisher technisch nicht verwendet, da ein brauchbares Verfahren zu seiner Herstellung fehlt, obwohl es wegen der höheren Acidität vorteilhaft sein sollte.

In der Literatur sind folgende Herstellungsverfahren beschrieben, die aber nur zu unreinen Gemischen führen.

Giran (*C.r*. 134 [1902] 1500): Ein Gemisch aus Na₂H₂P₂O₇ und Pyrophosphorsäure H₄P₂O₇ (im Überschuß) wird mehrere Stunden bei 100°C erhitzt. Die zwischen Tonplatten ausgebreitete Paste wird anschließend im Vakuum über P₂O₅ auf 110-120°C erhitzt und danach noch 5-6mal zwischen Tonplatten zur vollständigen Entfernung der überschüssigen Säure abgepreßt. Man erhält eine bröckelige, sehr zerfließliche Substanz, deren chemische Zusammensetzung der Formel NaH₃P₂O₇ entspricht. Weitere Eigenschaften, insbesondere eine physikochemische Charakterisierung des Produktes werden nicht beschrieben. Ebenso fehlen auch Angaben zu Umsatz und Ausbeute. Nachteilig ist bei diesem Verfahren der Einsatz von Pyrophosphorsäure (H₄P₂O₇ ), da deren Beschaffung und Handhabung schwierig ist und erhebliche Reste im Produkt verbleiben.

A. Winkler, H. Hofsäss, E. Thilo (*Z.Anorg. Allgem. Chem*. 306 [1960] 317/32,329): Beim Erhitzen eines Gemisches von Na₂H₂P₂O₇ und H₃PO₄ (Molverhältnis 90:10) bei Temperaturen von 160 - 225°C und H₂O-Dampfdrücken von ca. 17 bzw. 300 Torr bilden sich Gemische aus Na₂H₂P₂O₇, H₄P₂O₇ und NaH₃P₂O₇, die beim weiteren Erhitzen in Madrall sches Salz, d.h. hochmolekulares Phosphat übergehen.

Es werden folgende Eigenschaften des NaH₃P₂O₇-Anteils beschrieben:
- Die Substanz ist nicht mit Dioxan extrahierbar,
- sie enthält stark saure OH-Gruppen,
- sie ist nur bei einem bestimmten Mindestwasserdampfdruck beständig, der seine Weiterkondensation zu höhermolekularen Verbindungen verhindert.
- Ausbeute: Die gebildete NaH₃P₂O₇-Menge entspricht ca. 10% des gesamten P-Gehalts.
- Da ein reines NaH₃P₂O₇ nicht erhalten wurde, fehlen auch hier Angaben über weitere chemische Eigenschaften und analytische Daten der Substanz.

A. Norbert, C. Dautel, C.R. Acad. Sc. Paris, t. 262 (23.5,1966), S. 1534 - 1536: Eine wässrige Lösung von Diphosphorsäure H₄P₂O₇ und Na₂H₂P₂O₇ in äquimolaren Anteilen wird langsam unter Vakuum in Gegenwart von Phosphorsäureanhydrid getrocknet. Die Reaktionstemperatur sollte bei ca. 0°C gehalten werden, um eine Hydrolyse von P₂O₇²⁻ in PO₄³⁻ zu vermeiden. Nach einer Reaktionsdauer von mehreren Tagen wird ein weißes, hartes, aber leicht zu pulverisierendes Produkt erhalten, daß schwach hygroskopisch ist (Schmelzpunkt: 185-200°C).
Das durch Röntgendiffraktometrie (Debye-Scherrer-Verfahren) charakterisierte Produkt unterscheidet sich von Gemischen aus Orthophosphat und Polyphosphat gleicher Zusammensetzung und kann daher als überwiegend reines NaH₃P₂O₇ angesehen werden.
Das NaH₃P₂O₇ zersetzt sich in organischen Lösungsmitteln wie Alkohol. Aceton, Ether.
Nachteilig ist neben dem Einsatz von Pyrophosphorsäure (H₄P₂O₇) vor allem die kostspielige langsame Trocknung über P₂O₅, die das Produkt für einen technischen Einsatz unbrauchbar macht.

A. Norbert et al, C.R. Acad. Sc. Paris, t. 267 (04.11.1968), S. 1237 - 1239 haben auch versucht, die Verbindung aus den Komponenten bei höherer Temperatur zu erhalten (100 °C - 125 °C), jedoch eine Mischung aus Orthophosphat und Pyrophosphat der Formel Na₂H₈(PO₄)₂P₂O₅ erhalten, welche ebenfalls durch ihr Diffraktogramm charakterisiert werden konnten.

Daher stellte sich die Aufgabe, ein Verfahren zur Herstellung von NaH₃P₂O₇ zu finden, welches einerseits eine relativ hohe Ausbeute ermöglicht, andererseits relativ leicht zugängliche Ausgangsmaterialien nutzt.

Überraschenderweise stellt das saure Polyphosphatglas [NaₓH_{y}(PO₃)], welches durch Zusammenschmelzen einer entsprechenden Mischung von Natriumphosphat und Phosphor, mit einem Molverhältnis von 1 : 2 bei einer Temperatur von über 300°C erhalten wird, ein solches Ausgangsmaterial dar, denn durch einen rein thermischen Prozeß, bei dem das saure Polyphosphatglas bei Temperaturen von über 100 °C - 200 °C unter Wasserdampfdruck getempert wird, wandelt es sich durch Hydrolyse in NaH₃P₂O₇ um.

Die Temperierung wird vorzugsweise bei 110 - 180 °C, insbesondere 110 - 130°C durchgeführt, wobei der Wasserdampfdruck über dem feingepulverten Ausgangsmaterial 30 bis 100 mBar, insbesondere 35 bis 50 mBar beträgt.

Die Reaktion wird so lange durchgeführt, bis das Reaktionsprodukt überwiegend aus NaH₃P₂O₇ besteht, d.h. weniger als 20 %, vorzugsweise weniger als 10 % Polyphosphat und durch Überhydrolyse gebildetes Monophosphat enthält. Je nach Reaktionstemperatur werden Reaktionszeiten von 5 bis 100 Stunden benötigt.
Beim Tempern in einem Lösungsmittel, wie Diglyme oder Dioxan werden bei Temperaturen von 50 bis 150 °C, vorzugsweise 90 bis 120 °C und Reaktionszeiten von 0,5 bis 10 h gute Umsatzergebnisse erzielt.

Die erfindungsgemäßen sauren Pyrophosphate NaH₃P₂O₇ (I) stellen in gewisser Weise eine feste Form der Diphosphorsäure H₄P₂O₇ (II) dar, da sie ein acides Wasserstoffatom mit (II) vergleichbarer Acidität haben. Dadurch ergeben sich Anwendungen als Säuerungsmittel, beispielsweise in der Nahrungsmittel-, Textil- und Papierindustrie.
Bei pH ca. 2 kann (I) sowohl Protonen auf- als auch abgeben, dadurch ist eine mögliche Anwendung als Puffersubstanz gegeben.
Ganz allgemein kann dieses Phosphat zur Produktion von weiteren Phosphaten, als Mittel zur Stabilisierung von Emulsionen und Suspensionen, als Katalysator für Polymerisation und Hydratisierung, als Ätzmittel z.B. für Halbleiter, zur Herstellung von Feuerfesrwerkstoffen, Flammschutzmitteln und von piezoelektrische Kristallen dienen. (I) komplexiert wie alle Diphosphat zwei- und dreiwertige Metalle, zeigt jedoch aufgrund seines höheren Phosphatgehaltes bessere Bindewerte als diese.
Das Pyrophosphat (I) zeigt konservierende und bakteriostatische Eigenschaften, die sich u.a. durch die säuernde Wirkung erklären lassen.

Es zeigt stabilisierende Eigenschaften gegenüber Vitamin C, entbittert den Geschmack von mit Kaliumchlorid angereicherten Lebensmitteln und verhindert Verfärbungen durch enzymatisches oder nichtenzymatisches Bräunen (z.B. in Obst- und Gemüsesäften. in Sojaund Fischsoßen, in Kartoffeln sowie in anderen Lebensmittelprodukten). so daß es einen vorteilhaften Zusatz zu Lebensmitteln darstellt.
(I) wird in Gegenwart von Wasser zu Monophosphaten abgebaut und ist daher nicht toxisch.
Die folgenden Beispiele dienen zur Veranschaulichung der Herstellung:

### Beispiel 1:

Als Aggregat wurde ein Labortrockenschrank der Firma Heraeus verwendet. Die Proben aus feingepulvertem sauren Polyphosphat wurden unterschiedlich lange bei 110°C unter Normaldruck und bei einem merklichen Wasserdampfpartialdruck von ca. 45 mBar getempert. Der Wasserdampfdruck wurde über gut befeuchtetes Silicagel (Masse 10fach bezogen auf Saures Polyphosphat), welches sich ebenfalls in dem Trockenschrank unter gleichen Bedingungen befand, eingestellt. Zur gleichmäßigen Verteilung wurde das Pulver aus Saurem Polyphosphat mit einem Sieb auf flache Porzellanschalen aufgestreut.

| | |
|---|---|
| Folgende Temperungszeiten wurden gewählt | 1/2h, 1h, 3h und 5h bzw. 1, 3 und 5 Tage |

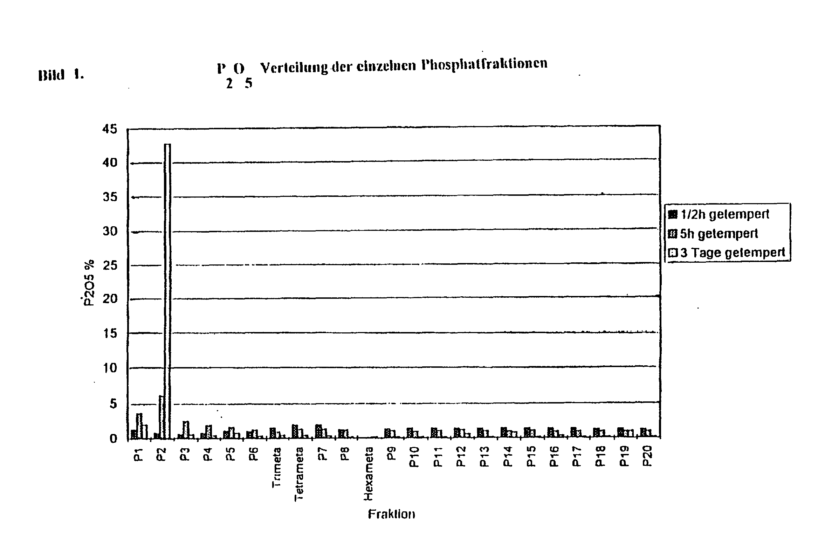

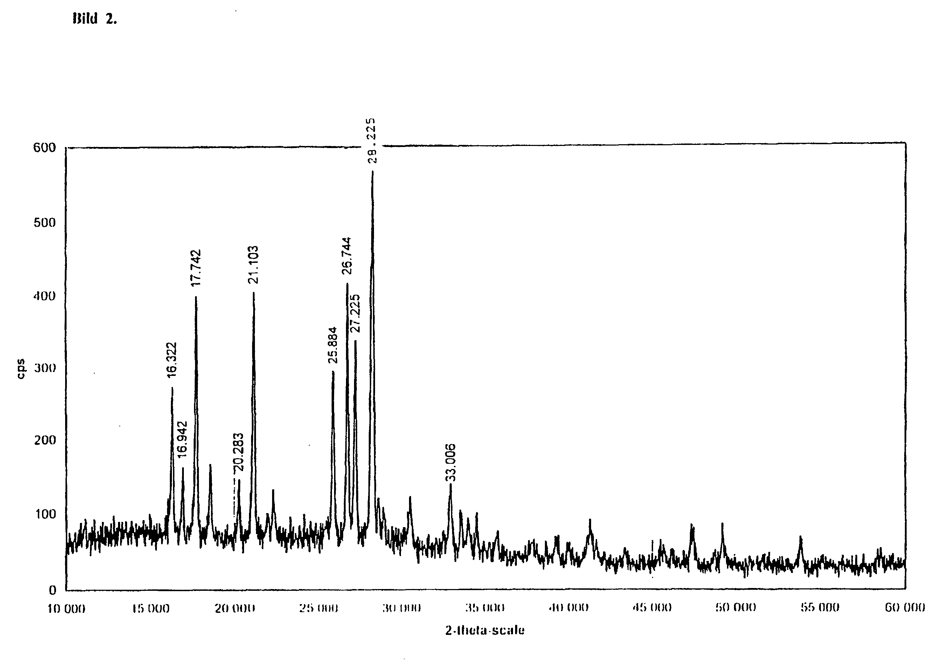

Bereits nach kurzen Temperzeiten können deutliche Veränderungen festgestellt werden. Durch die H₂O-Aufnahme aus der Luft kommt es zu einem "Zerfließen" der Körneroberfläche und Verklumpung des Pulvers. Beim Abkühlen der Proben im Exsikkator verhärtet sich der Klumpen, kann aber leicht wieder zu Pulver vermählen werden. Die Analysenergebnisse der verschiedenen Proben sind in der folgenden Tabelle wiedergegeben. Die Verteilung der verschiedenen Polymerisationsstufen ist in Bild 1 gezeigt.

**Tabelle 1:**

| **Ergebnis der analytischen Untersuchung der getemperten Proben** | | | | | | |
|---|---|---|---|---|---|---|
| Probe | Temperungszeit | pH 1% ige Lösung | Löslichkeit 1% ige Lösung | Hygroskopizität bei 65% rel. Luftfeuchte nach | | NMR Polymgrad |
| | bei 110°C | | [TE/F] nach 30 min | 5 h Gew.[%] | 24 h Gew.[%] | n |
| Wa 2455-2456 | unbehandelte Referenzprobe | 1,76 | 1.28 | 1,65 | 5,38 | 30.5 |
| ASPP1/5 | ½ h | 1,69 | 1,23 | 0,52 | 3,31 | 22,4 |
| ASPP 1/6 | 1 h | 1,69 | 1,46 | 0,76 | 3,39 | 23 |
| ASPP 1/7 | 3 h | 1,71 | 1,08 | 1,78 | 4,97 | 10,9 |
| ASPP 1/8 | 5 h | 1,71 | 1,48 | 1,88 | 5,08 | 6.5 |
| ASPP 1/1 | 1 Tag | 1,65 | 0,80 | 0,75 | 2,79 | 4,7* |
| ASPP 1/3 | 3 Tage | 1,65 | 0,48 | 0,42 | 1,06 | 3* |
| ASPP 1/2 | 7 Tage | 1,68 | 0,41 | 0,29 | 0,44 | 2,6* |

| | | | | | | |
|---|---|---|---|---|---|---|
| * Diese Polymerisationserade werden im wesentlichen durch den hohen Diphosphatanteil bestimmt | | | | | | |

Die Ergebnisse der ³¹P-NMR-Messung zeigen, daß bereits nach kurzen Temperungszeiten ein merklicher Abbau der Polyphosphatkerten eintritt, der sich mit zunehmender Temperung der Proben fortsetzt. Aus dem Spektrum ist zu entnehmen, daß sich neben einem leicht erhöhten Anteil von Monophosphat als Hauptanteil Diphosphat bildet. Das Signal für mittelständige Phosphatgruppen hat sich deutlich verkleinert, während ein scharfes Signal im Bereich von -6 bis -12 ppm , das für einen hohen Anteil an Diphosphat spricht, erscheint. Das Singulett für Monophosphat (0±2 ppm) bleibt weitgehend unverändert. Über die Berechnung der Integrationshöhen ergibt sich, daß der Gehalt an Diphosphat um den Betrag zugenommen hat, um welchen der Anteil an Polyphosphat gesunken ist.

Die Löslichkeit ist weitgehend gleich geblieben, bzw. hat sich mit zunehmender Temperungszeit der Proben etwas verbessert.

Ebenso ist der pH-Wert fast unverändert geblieben und liegt bei allen Proben noch deutlich unter 2.
Weiterhin ist interessant, daß die Hygroskopizität mit dem steigenden Diphosphatgehalt abnimmt. Es ist aus der Literatur bekannt, daß das Diphosphat NaH₃P₂O₇ ein Minluinum an Hygroskopizität besitzt (A. Norbert et al, 1968, S. 1238).
Die röntgendiffraktometrische Untersuchung der Probe ASPP1/3 (3 Tage getempert) erbrachte den Beweis, daß es sich bei der Verbindung um das bereits vermutete Pyrophosphat handelte. Die Linienverteilung entspricht der bei A. Norbert, C.R. Acad. Sc. Paris, 1966, S. 1535) angegebenen Verteilung.

### Beispiel 2

Wie Beispiel 1, jedoch bei 150°C Trockenschranktemperatur; nach 3 Tagen ergab sich eine Umwandlung zu 80 % in NaH₃P₂O₇ (über ³¹P-NMR).

### Beispiel 3

Wie Beispiel 2, jedoch in einer Mischapparatur (Lödige-Mischer), wobei ein bei 25 °C gesättigtes Wasserdampf-Luft-Gemisch mit 35 mBar Wasserdampf in die Mischkammer geleitet wird. Nach 8 h ergibt sich eine Ausbeute von 90 % NaH₃P₂O₇.

### Beispiel 4

25 g saures Polyphosphat (gemahlen) wird in 50 ml Diglyme, dem 2 ml Wasser zugesetzt ist, eingetragen und 0,5 h unter intensivem Rühren bei 120 °C hydrolysiert. Unmittelbar nach dem Eintragen "verklumpt" das saure Polyphosphat. Der Klumpen kristallisiert allmählich aus, wobei Rühren den Zerfallsprozeß des Glasaggregates unter weiterem Kristallisieren unterstützt. Danach wird der Festkörper unter Aussschluß von Luftfeuchtigkeit abgesaugt, mit Aceton gewaschen und unter Vakuum getrocknet, Ausbeute an NaH₃P₂O₇ 75% (über ³¹P-NMR bestimmt).
¹ Translator's note: there is at least one word missing in the German original here. It has been assumed that the intended word is *Mischung* (*=* mixture). This has been used in the translation.

## Patentansprüche

1. Verfahren zur Herstellung von NaH₃P₂O₇, **dadurch gekennzeichnet, daß** man glasiges saures Natriumpolyphosphat mit einem Na/P-Verhältnis von 1 : 2 als feines Pulver bei Temperaturen von 100 - 200 °C in feuchter Luft mit einem Wasserdampfdruck von 10 - 200 mBar oder in einem polaren Lösungsmittel, in dem das Phosphat unlöslich ist in Gegenwart der für die Hydrolyse ausreichenden Menge Wasser tempert, bis sich die Masse überwiegend in NaH₃P₂O₇ umgewandelt hat.

2. Verfahren gemäß Anspruch 1, **dadurch gekennzeichnet, daß** die Temperatur 110 - 180 °C, vorzugsweise 110 - 135 °C, der Wasserdampfdruck 30 bis 100 mBar und die Reaktionszeit 5 - 100 Stunden beträgt.

3. Verfahren gemäß Anspruch 1 oder 2, **dadurch gekennzeichnet, daß** das glasige saure Natriumphosphat durch Eindampfen einer aus Natriumphosphatsaizen und Phosphorsäure im Verhältnis von Na/P von 1 : 2, Schmelzen der Mischung bei Temperaturen von über 300 °C und Vermahlen des wieder abgekühlten Produktes erhalten wird.

4. Verfahren nach Anspruch 1 - 3, **dadurch gekennzeichnet, daß** das NaH₃P₂O₇ weniger als 25 %, vorzugsweise weniger als 10 % Polyphosphat und Monophosphat enthält.

5. Verfahren nach Anspruch 1, **dadurch gekennzeichnet, daß** die Reaktion in einem Ether, insbesondere in Diglyme oder Dioxan bei Temperaturen von 50 °C - 150 °C, vorzugsweise 90 - 120 °C in einer Zeit von 0,5 - 10 h durchgeführt wird.

6. Verwendung von NaH₃P₂O₇ gemäß Anspruch 1 - 5 als Säuerungsmittel, Puffersubstanz oder Komplexierungsmittel für die Nahrungsmittel-, Textil- oder Papierindustrie.

## Claims

1. Process for synthesis of NaH₃P₂O₇,
**characterised in that**
glass-like acid sodium polyphosphate with a Na/P ratio of 1:2 is tempered as a fine powder at temperatures of 100-200° C in damp air with a water vapour pressure of 10-200 mbar or in a polar solvent, in which the phosphate is insoluble, in the presence of a quantity of water sufficient for the hydrolysis, until the mass has overwhelmingly been converted into NaH₃P₂O₇.

2. Process according to Claim 1,
**characterised in that**
the temperature is 110-180° C, preferably 110-135° C, the water vapour pressure is 30-100 mbar and the reaction time is 5-100 hours.

3. Process according to Claim 1 or 2,
**characterised in that**
the glass-like acid sodium phosphate is obtained by evaporation of a mixture¹ of sodium phosphate salts and phosphoric acid in the ratio of Na/P of 1:2, melting of the mixture at over 300° C and grinding of the cooled product.

4. Process according to Claims 1 to 3,
**characterised in that**
the NaH₃P₂O₇ contains less than 25 %, preferably less than 10 %, polyphosphate and monophosphate.

5. Process according to Claim 1,
**characterised in that**
the reaction is carried out in an ether, particularly diglyme or dioxan, at temperatures of 50-150° C, preferably 90-120° C over a period of 0.5-10 hours.

6. Application of NaH₃P₂O₇ according to Claims 1 to 5 as an acidifier, buffer or complexing agent for the food, textile or paper industry.

## Revendications

1. Processus de fabrication de NaH₃P₂O₇, **caractérisé en ce que** l'on adoucit du polyphosphate de sodium vitreux acide dans un rapport Na/P de 1 : 2 en tant que poudre fine à des températures de 100 à 200°C dans l'air humide avec une pression de vapeur d'eau de 10 à 200 mbars ou dans un solvant polaire (présentant un pouvoir ionisant) dans lequel le phosphate est insoluble en présence de la quantité d'eau suffisante pour l'hydrolyse jusqu'à ce que la masse se soit transformée principalement en NaH₃P₃O₇.

2. Processus selon la revendication 1, **caractérisé en ce que** la température soit de 110 à 180 °C, de préférence 110 à 135°C, la pression de la vapeur d'eau soit de 30 à 100 mbars et que le temps de réaction soit entre 1 et 100 heures.

3. Processus selon la revendication 1 ou 2, **caractérisé en ce que** le phosphate de sodium vitreux acide soit maintenu par la vaporisation d'un mélange de sels de phosphates de sodium et d'acide phosphorique dans un rapport Na/P de 1 : 2. Fusion du mélange à des températures supérieures à 300°C et broyage du produit à nouveau refroidi.

4. Processus selon les revendications 1 à 3, **caractérisé en ce que** le NaH₃P₂O₇ contienne moins de 25%, de préférence moins de 10% de polyphosphate et de monophosphate

5. Processus selon la revendication 1, **caractérisé en ce que** la réaction soit effectuée dans un éther, particulièrement dans du diglyme ou dans un dioxane à des températures de 50°C à 150°C, de préférence de 90 à 120°C pendant 0,5 à 10 heures.

6. Utilisation de NaH₃P₂O₇ selon la revendication 1 à 5 comme acidifiant, substance tampon ou comme agent complexant pour l'industrie alimentaire, textile ou du papier.
